# EUROPEAN PATENT APPLICATION

(11) **EP 4 668 898 A1**
(43) Date of publication of application: **24.12.2025**
(21) Application number: 23921716.9
(22) Date of filing: 14.02.2023
(51) Int. Cl.: H04W 52/14, H04W 52/32

(54) **POWER CONTROL PARAMETER CONFIGURATION METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/076023
(87) International publication number: WO 2024/168548

(57) **Abstract**

The present disclosure relates to a method for configuring a power control parameter and apparatus, and a storage medium. The method is executed by a network device and comprises: in response to determining that a terminal sends a physical uplink shared channel (PUSCH) on the basis of multiple antenna panels or multiple transmission reception points (M-TRPs), configuring uplink power control default parameters associated with transmission configuration indicator (TCI) states corresponding to the multiple panels or M-TRPs. In the method for configuring a power control parameter provided by the present disclosure, by means of configuring uplink power control default parameters associated with TCI states corresponding to panels or TRPs used by a terminal to send a PUSCH, a method for configuring the uplink power control default parameters of the terminal under the condition of M-TRP transmission is provided, and thus the implementation of an M-TRP transmission scenario is better supported.

## Description

### FIELD

The present disclosure relates to the field of communication technologies, and in particular to a method for configuring a power control parameter, an apparatus and a storage medium.

### BACKGROUND

In related art, a network device configures transmission parameters related to a terminal, where the transmission parameters include, for example, a terminal uplink power control default parameter set. In a case where a unified Transmission Configuration Indicator (TCI) state is configured, the terminal uplink power control default parameter set may be associated with an Uplink (UL) TCI state or a joint TCI state. For a case where a UL/joint TCI state in a unified TCI state has no associated power control default parameter, Release 17 (Rel-17) of the 3rd Generation Partnership Project (3GPP) New Radio (NR) specifies that a set of default configurations can be added under the higher-layer Information element (IE) BWP-UplinkDedicated to indicate the power control default parameter for the UL/joint TCI state mentioned above that is not associated with a power control default parameter.

However, this default configuration applies to the case of Single-Transmission Reception Point (S-TRP) transmission. For the case of Multiple-Transmission Reception Point (M-TRP) transmission, there is currently no agreement on how the terminal uplink power control default parameter should be configured.

### SUMMARY

To overcome the issues in the related art, the present disclosure provides a method for configuring a power control parameter, an apparatus and a storage medium.

According to a first aspect of the embodiments of the present disclosure, a method for configuring a power control parameter is provided, where the method is performed by a network device and includes:
in response to determining that a terminal sends a Physical Uplink Shared Channel (PUSCH) based on a plurality of antenna panels (Panels) or Transmission Reception Points (TRPs), configuring an uplink power control default parameter associated with Transmission Configuration Indicator (TCI) states corresponding to the plurality of Panels or TRPs.

According to a second aspect of the embodiments of the present disclosure, a method for configuring a power control parameter is provided, where the method is performed by a terminal and includes:
determining an uplink power control default parameter associated with Transmission Configuration Indicator (TCI) states corresponding to a plurality of antenna panels (Panels) or Transmission Reception Points (TRPs);
the terminal sends a Physical Uplink Shared Channel (PUSCH) based on the plurality of Panels or TRPs.

According to a third aspect of the embodiments of the present disclosure, an apparatus for configuring a power control parameter is provided, including:
a determination unit, where the determination unit is configured to, in response to determining that a terminal sends a Physical Uplink Shared Channel (PUSCH) based on a plurality of antenna panels (Panels) or Transmission Reception Points (TRPs), configure an uplink power control default parameter associated with Transmission Configuration Indicator (TCI) states corresponding to the plurality of Panels or TRPs.

According to a fourth aspect of the embodiments of the present disclosure, an apparatus for configuring a power control parameter is provided, including:
a determination unit, where the determination unit is configured to determine an uplink power control default parameter associated with Transmission Configuration Indicator (TCI) states corresponding to a plurality of antenna panels (Panels) or Transmission Reception Points (TRPs);
the terminal sends a Physical Uplink Shared Channel (PUSCH) based on the plurality of Panels or TRPs.

According to a fifth aspect of the embodiments of the present disclosure, an apparatus for configuring a power control parameter is provided, including:
a processor; and
a memory for storing processor-executable instructions;
the processor is configured to perform the method according to the first aspect or any implementation manner of the first aspect.

According to a sixth aspect of the embodiments of the present disclosure, an apparatus for configuring a power control parameter is provided, including:
a processor; and
a memory for storing processor-executable instructions;
the processor is configured to perform the method according to the second aspect or any implementation manner of the second aspect.

According to a seventh aspect of the embodiments of the present disclosure, a storage medium is provided, where the storage medium stores instructions that, when executed by a processor of a first device, enable the first device to perform the method according to the first aspect or any implementation manner of the first aspect.

According to an eighth aspect of the embodiments of the present disclosure, a storage medium is provided, where the storage medium stores instructions that, when executed by a processor of a second device, causes the second device to perform the method according to the second aspect or any implementation manner of the second aspect.

The technical solutions provided by the embodiments of the present disclosure may include the following beneficial effects: by configuring an uplink power control default parameter associated with TCI states corresponding to Panels or TRPs used by the terminal for sending the PUSCH, a configuration method for the terminal uplink power control default parameter in the case of M-TRP transmission is provided, which better supports the implementation of the M-TRP transmission scenario.

It should be understood that the above general description and the following detailed description are exemplary and explanatory only and do not limit the present disclosure.

### BRIEF DESCRIPTION OF THE DRAWINGS

The drawings, which are incorporated in and constitute a part of this specification, illustrate embodiments consistent with the present disclosure and, together with the description, serve to explain the principles of the present disclosure.
FIG. 1 is a schematic diagram of a wireless communication system according to an embodiment.
FIG. 2 is a schematic diagram of an M-TRP transmission mode under S-DCI scheduling according to an embodiment.
FIG. 3 is a schematic diagram of an M-TRP transmission mode under M-DCI scheduling according to an embodiment.
FIG. 4 is a flowchart of a method for configuring a power control parameter according to an embodiment.
FIG. 5 is a flowchart of a method for configuring an uplink power control default parameter associated with TCI states corresponding to a plurality of Panels or TRPs according to an embodiment.
FIG. 6 is a flowchart of a method for configuring an uplink power control default parameter associated with TCI states corresponding to a plurality of Panels or TRPs according to an embodiment.
FIG. 7 is a flowchart of a method for configuring an uplink power control default parameter associated with TCI states corresponding to a plurality of Panels or TRPs according to an embodiment.
FIG. 8 is a flowchart of a method for configuring a power control parameter according to an embodiment.
FIG. 9 is a flowchart of a method for determining an uplink power control default parameter associated with TCI states corresponding to a plurality of Panels or TRPs according to an embodiment.
FIG. 10 is a flowchart of a method for determining an uplink power control default parameter associated with TCI states corresponding to a plurality of Panels or TRPs according to an embodiment.
FIG. 11 is a flowchart of a method for determining an uplink power control default parameter associated with TCI states corresponding to a plurality of Panels or TRPs according to an embodiment.
FIG. 12 is a block diagram of an apparatus for configuring a power control parameter according to an embodiment.
FIG. 13 is a block diagram of an apparatus for configuring a power control parameter according to an embodiment.
FIG. 14 is a block diagram of an apparatus for configuring a power control parameter according to an embodiment.
FIG. 15 is a block diagram of an apparatus for configuring a power control parameter according to an embodiment.

### DETAILED DESCRIPTION

Exemplary embodiments will be described in detail herein, examples of which are illustrated in the drawings. When the following description refers to the drawings, unless otherwise indicated, the same numbers in different drawings represent the same or similar elements. The implementations described in the following embodiments do not represent all implementations consistent with the present disclosure.

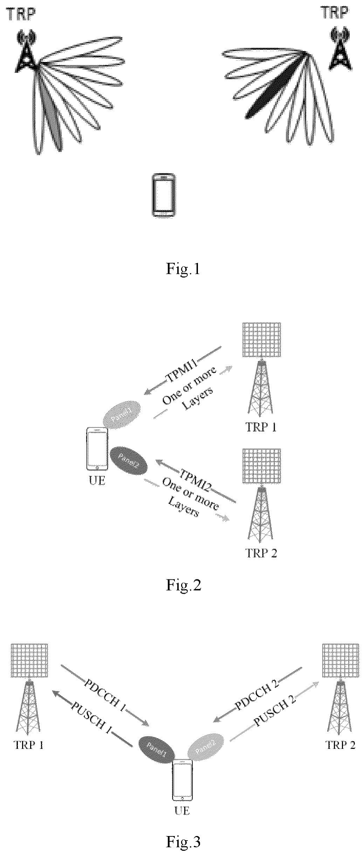

The communication method of the embodiments of the present disclosure can be applied to the wireless communication system shown in FIG. 1. As shown in FIG. 1, the wireless communication system includes a network device and a terminal. The terminal connects to the network device through wireless resources and performs data transmission.

It can be understood that the wireless communication system shown in FIG. 1 is only schematic. The wireless communication system may also include other network devices, such as core network devices, wireless relay devices, and wireless backhaul devices, which are not shown in FIG. 1. The embodiments of the present disclosure do not limit the number of network devices and terminals included in the wireless communication system.

Furthermore, it can be understood that the wireless communication system in the embodiments of the present disclosure is a network that provides wireless communication functions. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), Carrier Sense Multiple Access with Collision Avoidance (CSMA/CA). Depending on factors such as network capacity, rate, and delay, networks can be classified as 2G (generation) networks, 3G networks, 4G networks, or future evolved networks, such as 5G networks. 5G networks can also be called New Radio (NR) networks. For convenience of description, the wireless communication network is sometimes referred to simply as a network herein.

Furthermore, the network device involved in the present disclosure may also be called a wireless access network device. The wireless access network device may be a base station, an evolved Node B (eNB), a home base station, an access point (AP) in a wireless fidelity (WIFI) system, a wireless relay node, a wireless backhaul node, a transmission point (TP), or a transmission and reception point (TRP), etc. It may also be a gNB in an NR system, or may be a component constituting a base station or part of a device. It should be understood that in the embodiments of the present disclosure, the specific technology and specific device form adopted by the network device are not limited. In the present disclosure, the network device may provide communication coverage for a specific geographical area and may communicate with terminals located within the coverage area (cell). Additionally, when it is a Vehicle-to-Everything (V2X) communication system, the network device may also be a vehicle-mounted device.

Furthermore, the terminal involved in the present disclosure may also be called a terminal device, User Equipment (UE), Mobile Station (MS), Mobile Terminal (MT), etc. It is a device that provides voice and/or data connectivity to a user. For example, the terminal may be a handheld device with wireless connection function, a vehicle-mounted device, etc. Currently, some examples of terminals are: smartphones, Customer Premise Equipment (CPE), pocket computers (Pocket Personal Computer, PPC), palmtop computers, Personal Digital Assistants (PDA), notebook computers, tablet computers, wearable devices, or vehicle-mounted devices. Furthermore, when it is a V2X communication system, the terminal device may also be a vehicle-mounted device. It should be understood that the embodiments of the present disclosure do not limit the specific technology and specific device form adopted by the terminal.

The Physical Uplink Shared Channel (PUSCH) can be transmitted in directions towards TRPs of multiple base stations. In R17, cooperative transmission under the Time Division Multiplexing (TDM) transmission mode was mainly standardized, where different repetitions of the same information on the PUSCH are sent to different TRPs of the base station at different Transmission Occasions (TOs) in the time domain. This method has relatively low requirements on terminal capability, does not require the capability to support simultaneous beam transmission, but has larger transmission delay.

For the uplink, the PUSCH channels facing different TRPs may pass through channels with very different spatial characteristics. Therefore, it is considered that the Quasi Co-Location-D (QCL-D) of the PUSCH channels in different transmission directions is different.

R15/16 did not consider the M-TRP scenario, and uplink transmission was for a single TRP. R17 enhanced uplink transmission under Single-Downlink Control Information (S-DCI) for M-TRP, where the uplink PUSCH is transmitted in directions towards TRPs of multiple base stations. In R17, cooperative transmission under the TDM transmission mode was mainly standardized, where different repetitions of the same information on the PUSCH are sent to different TRPs of the base station at different TOs in the time domain. This method has relatively low requirements on terminal capability, as only one TRP-direction PUSCH needs to be sent per TO, so it does not require the capability to support simultaneous beam transmission, but has larger transmission delay.

In the enhancement targets of R18, it is mainly hoped to achieve simultaneous cooperative transmission through multiple terminal panels towards TRPs of multiple base stations to increase transmission reliability and throughput, while effectively reducing transmission delay under multi-TRP, but it requires the terminal to have the capability to transmit multiple beams simultaneously. PUSCH transmission can be based on multi-PANEL/TRP transmission scheduled by a single Physical Downlink Control Channel (PDCCH), i.e., S-DCI scheduling, as shown in FIG. 2. The UE communicates with TPR1 of the base station through panel1, for example, receiving a first Transmit Precoding Matrix Indicator (TPMI) TPMI1 sent by TPR1, and sending one or more transmission-layer-related information to TRP1, and communicates with TPR2 of the base station through panel2, for example, receiving a second TPMI TPMI2 sent by TPR2, and sending one or more transmission-layer-related information to TRP2. It can also be based on multi-PANEL/TRP transmission scheduled by different PDCCHs, i.e., Multiple-Downlink Control Information (M-DCI) scheduling, as shown in FIG. 3. The UE communicates with TPR1 of the base station through panel1, for example, receiving PDCCH1 sent by TRP1 and sending PUSCH1 to TRP1, and communicates with TPR2 of the base station through panel2, for example, receiving PDCCH2 sent by TRP2 and sending PUSCH2 to TRP2.

A terminal is generally configured with multiple physical panels, and the capabilities of different panels may also be different. For example, they may have different numbers of Sounding Reference Signal (SRS) ports, and the maximum number of data transmission layers supported may not necessarily be the same. For instance, one panel supports a maximum of 2 -layer transmission, while another panel supports a maximum of 4-layer transmission. The network scheduler will determine whether the terminal is currently suitable for simultaneous uplink transmission using multiple panels. If the terminal is currently suitable for simultaneous uplink transmission using multiple panels and is scheduled, the network will directly or indirectly indicate relevant transmission parameters, including specific beam indication information for the terminal, the number of data layers used for transmission, the Demodulation Reference Signal (DMRS) port allocation used, and precoding indication information, etc.

R18 uplink Simultaneous Transmission from Multiple Panels (STxMP) supports transmission schemes for S-DCI-based PUSCH including Space Division Multiplexing (SDM) and Single Frequency Network (SFN) schemes. The SDM scheme refers to different parts of one Transport Block (TB) of the PUSCH being transmitted on the same time-frequency resources through respective corresponding DMRS ports or port combinations allocated on different Panels, each facing two different TRPs. Different Panel/TRP/TOs are associated with different TCI states, i.e., beams. The SFN scheme refers to one TB of the PUSCH being transmitted on the same time-frequency resources through the same DMRS ports or port combinations allocated on different Panels, each facing two different TRPs. Different Panel/TRP/TOs are associated with different TCI states, i.e., beams.

In Rel-17, the uplink power control default parameter includes up to three sets of power control parameters {P0, alpha, closed loop index}, which can be associated with a UL TCI state or a joint TCI state. For the case where no power control default parameter is configured under the unified TCI state, the higher layer adds a set of default configurations under the IE BWP-UplinkDedicated. When the UE is configured with a unified TCI state but the UL power control default parameter is not configured for any unified TCI state/UL TCI state of the cell, this configuration provides default power control default parameters for PUCCH, PUSCH, and SRS.

However, currently, this configuration in the protocol is only used for S-TRP transmission. Therefore, for the M-TRP case, a corresponding association scheme between the default power control default parameter and the TCI needs to be considered. For uplink M-TRP transmission configuration, when using the unified TCI framework, it may occur that one or two joint/UL TCI states applied to PUSCH/PUCCH transmission are not associated with an uplink power control default parameter. To solve this problem, RAN2 introduced an uplink power control default parameter corresponding to one TCI state in BWP_UplinkDedicated during R17 standardization. At the same time, for PUSCH transmission, in the case of M-TRP transmission, there is currently no agreement on how the terminal uplink power control default parameter should be configured.

In view of this, the embodiments of the present disclosure provide a method for configuring a power control parameter. By configuring an uplink power control default parameter associated with TCI states corresponding to Panels or TRPs used by the terminal for sending the PUSCH, a configuration method for the terminal uplink power control default parameter in the case of M-TRP transmission is provided, better supporting the implementation of the M-TRP transmission scenario.

In the embodiments of the present disclosure, a solution is proposed for how to determine the uplink power control default parameter and the association relationship between the determined uplink power control default parameter and the TCI state when, in uplink M-TRP transmission configuration under the unified TCI framework, one or two joint/UL TCI states applied to PUSCH/PUCCH/SRS transmission are not associated with an uplink power control default parameter, which can better support the implementation of the M-TRP transmission scenario.

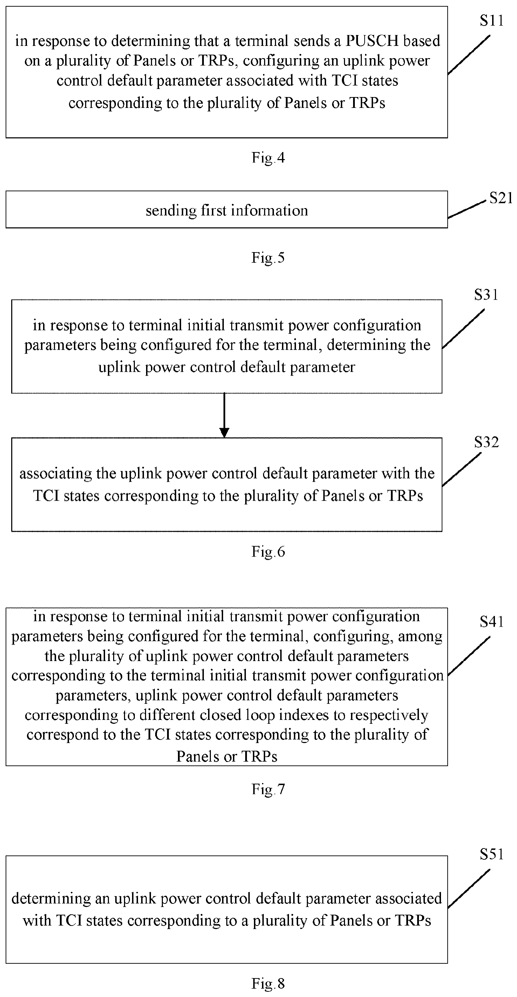

FIG. 4 is a flowchart of a method for configuring a power control parameter according to an embodiment. As shown in FIG. 4, the method for configuring a power control parameter is performed by a network device and includes the following steps.

In step S11, in response to determining that a terminal sends a Physical Uplink Shared Channel (PUSCH) based on a plurality of antenna panels (Panels) or Transmission Reception Points (TRPs), configure an uplink power control default parameter associated with Transmission Configuration Indicator (TCI) states corresponding to the plurality of Panels or TRPs.

In the embodiments of the present disclosure, the network device may, in response to determining that the terminal sends the PUSCH based on the plurality of Panels or TRPs, configure the uplink power control default parameter associated with the TCI states corresponding to the plurality of Panels or TRPs. The uplink power control default parameter may be associated with TCI states corresponding to the plurality of Panels or TRPs used by the terminal for sending the PUSCH.

In the embodiments of the present disclosure, the method for configuring a power control parameter can be used to support STxMP transmission as well as TDM+STxMP hybrid transmission, and transmission scenarios based on S-DCI and M-DCI, to provide a scheme for configuring the uplink power control default parameter in the M-TRP transmission scenario.

According to the technical solution of the embodiments of the present disclosure, by configuring the uplink power control default parameter associated with TCI states corresponding to Panels or TRPs used by the terminal for sending the PUSCH, a configuration method for the terminal uplink power control default parameter in the case of M-TRP transmission is provided, better supporting the implementation of the M-TRP transmission scenario.

FIG. 5 is a flowchart of a method for configuring an uplink power control default parameter associated with TCI states corresponding to a plurality of Panels or TRPs according to an embodiment. As shown in FIG. 5, the method includes the following steps.

Step S21: sending first information.

The first information is used to configure, via higher layer signaling, the uplink power control default parameter associated with the TCI states corresponding to the plurality of Panels or TRPs in a power control parameter set of the terminal.

In the embodiments of the present disclosure, the network device may send first information. The first information may be used to configure the uplink power control default parameter associated with the TCI states corresponding to the plurality of Panels or TRPs. That is, the network device may send the first information to indicate the uplink power control default parameter to the terminal through the first information.

In the embodiments of the present disclosure, the higher layer signaling may be Radio Resource Control (RRC) signaling.

In the embodiments of the present disclosure, the first information may be used to configure a plurality of uplink power control default parameters in the power control parameter set of the terminal. In one example, the first information may be an extended BWP_UplinkDedicated. The extended BWP_UplinkDedicated may be used to indicate, in the power control parameter set of the terminal, the uplink power control default parameter associated with the TCI states corresponding to the plurality of Panels or TRPs.

The plurality of uplink power control default parameters may be different multiple uplink power control default parameters. In one example, the plurality of uplink power control default parameters may respectively correspond to different closed loop power control indexes (closed loop index). That is, the plurality of uplink power control default parameters may respectively correspond one-to-one to a plurality of different closed loop power control indexes, meaning each uplink power control default parameter corresponds to one closed loop power control index, and the closed loop power control indexes corresponding to the multiple uplink power control default parameters are different. Furthermore, different uplink power control default parameters among the plurality of uplink power control default parameters may be respectively associated with different TCI states among the TCI states corresponding to the plurality of Panels or TRPs. That is, different uplink power control default parameters among the plurality of uplink power control default parameters are respectively associated one-to-one with different TCI states among the TCI states corresponding to the plurality of Panels or TRPs. That is, each different uplink power control default parameter among the plurality of uplink power control default parameters is associated with one different TCI state. In one example, two uplink power control default parameters may be indicated based on the extended BWP _UplinkDedicated, namely uplink power control default parameter setting1 and uplink power control default parameter setting2. Wherein setting1 and setting2 respectively correspond to different closed loop indexes, for example, setting1 corresponds to closed loop index1, and setting2 corresponds to closed loop index2, or vice versa. Furthermore, setting1 and setting2 are associated with different TCI states among the TCI states corresponding to the two Panels or TRPs, for example, setting1 is associated with TCI state1, and setting2 is associated with TCI state2, or vice versa.

In the embodiments of the present disclosure, among the TCI states corresponding to the plurality of Panels or TRPs, there may be a first TCI state associated with an uplink power control default parameter and a second TCI state not associated with any uplink power control default parameter; or the TCI states corresponding to the plurality of Panels or TRPs may include a third TCI state configured for communication based on a single transmission and reception point; at this time, a first uplink power control default parameter may be configured to be associated with the second TCI state or the third TCI state.

That is to say, in the case of M-TRP transmission, it may occur that one or more Joint/UL TCI states corresponding to each TRP in M-TRP transmission are not associated with an uplink power control default parameter, i.e., have no uplink power control default parameter, while one or more other Joint/UL TCI states are associated with an uplink power control default parameter, i.e., have an uplink power control default parameter; on the other hand, there may also be S-TRP transmission under M-TRP configuration, and the TCI state corresponding to this S-TRP is not associated with an uplink power control default parameter, i.e., has no uplink power control default parameter. At this time, it is necessary to configure an uplink power control default parameter for these TCI states not associated with an uplink power control default parameter.

In the embodiments of the present disclosure, the first uplink power control default parameter may be configured to be associated with the one or more Joint/UL TCI states mentioned above that are not associated with an uplink power control default parameter. Alternatively, the first uplink power control default parameter may be configured to be associated with the TCI state corresponding to the S-TRP mentioned above that is not associated with an uplink power control default parameter.

The first uplink power control default parameter may include: a first specified uplink power control default parameter among the plurality of uplink power control default parameters; or a second specified uplink power control default parameter among the plurality of uplink power control default parameters, where the second specified uplink power control default parameter corresponds to a closed loop index different from a closed loop index corresponding to a default uplink power control default parameter associated with a TCI state.

In one example, assume in a transmission scenario based on 2 TRPs, there is a situation where the Joint/UL TCI state corresponding to one TRP is not associated with an uplink power control default parameter, while the Joint/UL TCI state corresponding to the other TRP is associated with an uplink power control default parameter. At the same time, the extended BWP _UplinkDedicated indicates two uplink power control default parameters. On one hand, one of the two uplink power control default parameters indicated by BWP_UplinkDedicated, for example, the first uplink power control default parameter, may be used as the first uplink power control default parameter, and this first uplink power control default parameter is associated with the TCI state mentioned above that is not associated with an uplink power control default parameter. It can be understood by those skilled in the art that determining the first uplink power control default parameter among the two as the first uplink power control default parameter is only an example. In actual implementation, any one of the two uplink power control default parameters may be determined as the first uplink power control default parameter according to need.

On the other hand, among the two uplink power control default parameters indicated by BWP _UplinkDedicated, the uplink power control default parameter whose closed loop index is different from the closed loop index corresponding to the uplink power control default parameter associated with the TCI state that is associated, may be used as the first uplink power control default parameter. For example, if the closed loop index of the uplink power control default parameter associated with the associated TCI state is 0, then the uplink power control default parameter with closed loop index 1 may be determined as the first uplink power control default parameter, or vice versa.

In another example, assume in an M-TRP transmission scenario, a certain TCI state is configured for communication based on a single transmission and reception point. At this time, one of the two uplink power control default parameters indicated by BWP _UplinkDedicated, for example, the first uplink power control default parameter, may be used as the first uplink power control default parameter, and this first uplink power control default parameter is associated with the TCI state mentioned above configured for communication based on a single transmission and reception point. Similarly, it can be understood by those skilled in the art that the determination of the first uplink power control default parameter is not limited to the first one. In actual implementation, any one of the two uplink power control default parameters may be determined as the first uplink power control default parameter according to need.

In the embodiments of the present disclosure, all the TCI states corresponding to the plurality of Panels or TRPs may be not associated with any uplink power control default parameter; at this time, uplink power control default parameters at different sequence positions among the plurality of uplink power control default parameters may be configured to be respectively associated with different TCI states among the TCI states corresponding to the plurality of Panels or TRPs. Alternatively, uplink power control default parameters corresponding to different closed loop indexes among the plurality of uplink power control default parameters may be configured to be respectively associated with different TCI states among the TCI states corresponding to the plurality of Panels or TRPs.

That is to say, in the case of M-TRP transmission, it may occur that all Joint/UL TCI states corresponding to each TRP in M-TRP transmission are not associated with an uplink power control default parameter, i.e., have no uplink power control default parameter. At this time, it is necessary to configure an uplink power control default parameter for these TCI states not associated with an uplink power control default parameter.

In the embodiments of the present disclosure, uplink power control default parameters at different sequence positions among the plurality of uplink power control default parameters may be configured to be respectively associated with different TCI states among the TCI states corresponding to the plurality of Panels or TRPs. In one example, assume in a transmission scenario based on 2 TRPs, the Joint/UL TCI states corresponding to the 2 TRPs are both not associated with an uplink power control default parameter. At the same time, the extended BWP_UplinkDedicated indicates two uplink power control default parameters. At this time, the first uplink power control default parameter among the two indicated by BWP_UplinkDedicated may be associated with the Joint/UL TCI state corresponding to the first TRP, and the second uplink power control default parameter may be associated with the Joint/UL TCI state corresponding to the second TRP, or vice versa.

In the embodiments of the present disclosure, it is also possible to configure the two uplink power control default parameters such that those corresponding to different closed loop indexes are respectively associated with different TCI states among the TCI states corresponding to the plurality of Panels or TRPs. In one example, assume in a transmission scenario based on 2 TRPs, the Joint/UL TCI states corresponding to the 2 TRPs are both not associated with an uplink power control default parameter. At the same time, the extended BWP_UplinkDedicated indicates two uplink power control default parameters. At this time, the uplink power control default parameter with closed loop index 0 among the two indicated by BWP_UplinkDedicated may be associated with the Joint/UL TCI state corresponding to the first TRP, and the uplink power control default parameter with closed loop index 1 may be associated with the Joint/UL TCI state corresponding to the second TRP, or vice versa.

According to the embodiments of the present disclosure, by extending BWP_UplinkDedicated so that the extended BWP_UplinkDedicated can be used to configure multiple uplink power control default parameters, and based on these multiple uplink power control default parameters, configure the uplink power control default parameter associated with the TCI states corresponding to the plurality of Panels or TRPs, a configuration method for the terminal uplink power control default parameter in the case of M-TRP transmission is provided, better supporting the implementation of the M-TRP transmission scenario.

In the embodiments of the present disclosure, the first information may be used to configure a single uplink power control default parameter. In one example, the first information may be BWP _UplinkDedicated. The BWP_UplinkDedicated may be used to indicate a single uplink power control default parameter as the terminal's uplink power control default parameter.

In the embodiments of the present disclosure, the TCI states corresponding to the plurality of Panels or TRPs may all be associated with the single uplink power control default parameter. At this time, the uplink power control default parameter corresponding to the TCI states corresponding to the plurality of Panels or TRPs is this single uplink power control default parameter.

In the embodiments of the present disclosure, among the TCI states corresponding to the plurality of Panels or TRPs, there may be a first TCI state associated with an uplink power control default parameter and a second TCI state not associated with any uplink power control default parameter; or the TCI states corresponding to the plurality of Panels or TRPs may include a third TCI state configured for communication based on a single transmission and reception point; at this time, the single uplink power control default parameter may be configured to be associated with the second TCI state or the third TCI state.

That is to say, in the case of M-TRP transmission, it may occur that one or more Joint/UL TCI states corresponding to each TRP in M-TRP transmission are not associated with an uplink power control default parameter, i.e., have no uplink power control default parameter, while one or more other Joint/UL TCI states are associated with an uplink power control default parameter, i.e., have an uplink power control default parameter; on the other hand, there may also be S-TRP transmission under M-TRP configuration, and the TCI state corresponding to this S-TRP is not associated with an uplink power control default parameter, i.e., has no uplink power control default parameter. At this time, it is necessary to configure an uplink power control default parameter for these TCI states not associated with an uplink power control default parameter.

In the embodiments of the present disclosure, the single uplink power control default parameter configured based on the first information may be associated with the second TCI state or the third TCI state. At this time, the uplink power control default parameter corresponding to the one or more Joint/UL TCI states mentioned above that are not associated and the uplink power control default parameter corresponding to the TCI state of the S-TRP associated with an uplink power control default parameter mentioned above are all this single uplink power control default parameter.

In the embodiments of the present disclosure, the TCI states corresponding to the plurality of Panels or TRPs may all be not associated with any uplink power control default parameter; at this time, the TCI states corresponding to the plurality of Panels or TRPs may be configured to be associated with the single uplink power control default parameter.

That is to say, in the case of M-TRP transmission, it may occur that all Joint/UL TCI states corresponding to each TRP in M-TRP transmission are not associated with an uplink power control default parameter, i.e., have no uplink power control default parameter. At this time, it is necessary to configure an uplink power control default parameter for these TCI states not associated with an uplink power control default parameter.

In the embodiments of the present disclosure, each TCI state associated with an uplink power control default parameter may be configured to be associated with the single uplink power control default parameter configured based on the first information. At this time, the uplink power control default parameter corresponding to the TCI states corresponding to the plurality of Panels or TRPs mentioned above is this single uplink power control default parameter. At this time, the terminal's PUSCH/PUCCH transmission may be implemented based on SFN/TDM/FDM schemes.

According to the embodiments of the present disclosure, by using BWP_UplinkDedicated to configure the uplink power control default parameter associated with one or more TCI states among the TCI states corresponding to the plurality of Panels or TRPs, another configuration method for the terminal uplink power control default parameter in the case of M-TRP transmission is provided, better supporting the implementation of the M-TRP transmission scenario.

In the embodiments of the present disclosure, when the terminal sends the PUSCH based on the plurality of Panels or TRPs, it may not use the unified TCI state framework to determine the resources corresponding to sending the PUSCH. At this time, to determine the resources corresponding to sending the PUSCH, it is necessary to configure terminal initial transmit power configuration parameters P0AlphaSet for the terminal.

FIG. 6 is a flowchart of a method for configuring an uplink power control default parameter associated with TCI states corresponding to a plurality of Panels or TRPs according to an embodiment. As shown in FIG. 6, the method includes the following steps.

Step S31: in response to terminal initial transmit power configuration parameters being configured for the terminal, determining the uplink power control default parameter.

Step S32: associating the uplink power control default parameter with the TCI states corresponding to the plurality of Panels or TRPs.

In the embodiments of the present disclosure, when it is determined that terminal initial transmit power configuration parameters are configured for the terminal, the uplink power control default parameter may be determined, and then the uplink power control default parameter may be associated with the TCI states corresponding to the plurality of Panels or TRPs, thereby completing the configuration of the uplink power control default parameter for the terminal. The terminal initial transmit power configuration parameters may be P0AlphaSet.

In the embodiments of the present disclosure, the uplink power control default parameter may be determined by at least one of the following methods: determining the uplink power control default parameter corresponding to a Sounding Reference Signal Resource Indicator (SRI) corresponding to the PUSCH as the uplink power control default parameter; or determining, from the terminal initial transmit power configuration parameters, an uplink power control default parameter corresponding to a specified index as the uplink power control default parameter.

That is to say, for the case where P0AlphaSet is configured for the terminal and the PUSCH indicates an SRI, the corresponding uplink power control default parameter may be determined through the corresponding SRI as the uplink power control default parameter. In one example, if the PUSCH indicates SRI1 and SRI2, the uplink power control default parameter corresponding to SRI1 may be determined as the uplink power control default parameter, or the uplink power control default parameter corresponding to SRI2 may be determined as the uplink power control default parameter.

On the other hand, since P0AlphaSet can correspond to multiple uplink power control default parameters, the uplink power control default parameter corresponding to a specified index in P0AlphaSet may be directly used as the uplink power control default parameter. In one example, assume in a transmission scenario based on 2 TRPs, uplink power control default parameters corresponding to the 2 TRPs respectively need to be determined. At this time, the first and second uplink power control default parameters with the lowest indexes among the uplink power control default parameters corresponding to P0AlphaSet may be used as the uplink power control default parameters.

According to the embodiments of the present disclosure, by using the uplink power control default parameter determined via the SRI corresponding to the PUSCH when P0AlphaSet is configured for the terminal, yet another configuration method for the terminal uplink power control default parameter in the case of M-TRP transmission is provided, better supporting the implementation of the M-TRP transmission scenario.

FIG. 7 is a flowchart of a method for configuring an uplink power control default parameter associated with TCI states corresponding to a plurality of Panels or TRPs according to an embodiment. As shown in FIG. 7, the method includes the following steps.

Step S41: in response to terminal initial transmit power configuration parameters being configured for the terminal, configuring, among the plurality of uplink power control default parameters corresponding to the terminal initial transmit power configuration parameters, uplink power control default parameters corresponding to different closed loop indexes to respectively correspond to the TCI states corresponding to the plurality of Panels or TRPs.

In the embodiments of the present disclosure, the terminal initial transmit power configuration parameters may be P0AlphaSet.When it is determined that P0AlphaSet is configured for the terminal, since P0AlphaSet can correspond to multiple uplink power control default parameters, the uplink power control default parameter may be determined based on P0AlphaSet, and then the uplink power control default parameter may be associated with the TCI states corresponding to the plurality of Panels or TRPs, thereby completing the configuration of the uplink power control default parameter for the terminal.

In one example, assume in a transmission scenario based on 2 TRPs, uplink power control default parameters corresponding to the 2 TRPs respectively need to be determined, i.e., it is necessary to associate the first TCI state corresponding to the first TRP and the second TCI state corresponding to the second TRP with corresponding uplink power control default parameters. At this time, the uplink power control default parameter corresponding to closed loop index 0 among those corresponding to P0AlphaSet may be associated with the first TCI state, and the uplink power control default parameter corresponding to closed loop index 1 may be associated with the second TCI state, or vice versa.

According to the embodiments of the present disclosure, by using the uplink power control default parameter determined via the multiple uplink power control default parameters corresponding to P0AlphaSet when P0AlphaSet is configured for the terminal, still another configuration method for the terminal uplink power control default parameter in the case of M-TRP transmission is provided, better supporting the implementation of the M-TRP transmission scenario.

FIG. 8 is a flowchart of a method for configuring a power control parameter according to an embodiment. As shown in FIG. 8, the method for configuring a power control parameter is performed by a terminal and includes the following steps.

Step S51: determining an uplink power control default parameter associated with Transmission Configuration Indicator (TCI) states corresponding to a plurality of antenna panels (Panels) or Transmission Reception Points (TRPs);
the terminal sends a Physical Uplink Shared Channel (PUSCH) based on the plurality of Panels or TRPs.

In the embodiments of the present disclosure, the terminal may determine the uplink power control default parameter associated with the Transmission Configuration Indicator (TCI) states corresponding to the plurality of antenna panels (Panels) or Transmission Reception Points (TRPs). In one example, the terminal may determine the uplink power control default parameter by receiving information containing the uplink power control default parameter sent by the network device. The uplink power control default parameter may be associated with TCI states corresponding to the plurality of Panels or TRPs used by the terminal for sending the PUSCH.

In the embodiments of the present disclosure, the method for configuring a power control parameter can be used to support STxMP transmission as well as TDM+STxMP hybrid transmission, and transmission scenarios based on S-DCI and M-DCI, to provide a scheme for configuring the uplink power control default parameter in the M-TRP transmission scenario.

According to the embodiments of the present disclosure, by configuring the uplink power control default parameter associated with TCI states corresponding to Panels or TRPs used by the terminal for sending the PUSCH, a configuration method for the terminal uplink power control default parameter in the case of M-TRP transmission is provided, better supporting the implementation of the M-TRP transmission scenario.

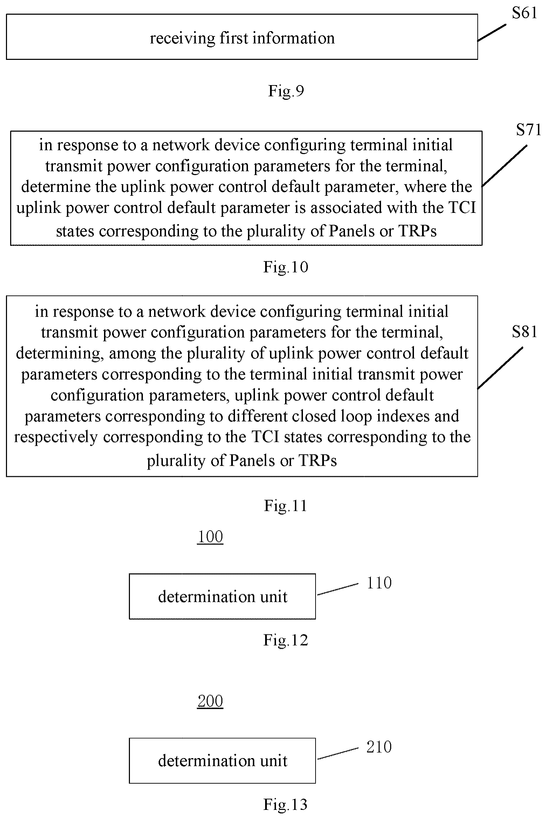

FIG. 9 is a flowchart of a method for determining an uplink power control default parameter associated with TCI states corresponding to a plurality of Panels or TRPs according to an embodiment. As shown in FIG. 9, the method includes the following steps.

Step S61: receiving first information.

The first information is used to configure, via higher layer signaling, the uplink power control default parameter associated with the TCI states corresponding to the plurality of Panels or TRPs in a power control parameter set of the terminal.

In the embodiments of the present disclosure, the terminal may receive first information. The first information may be used to configure the uplink power control default parameter associated with the TCI states corresponding to the plurality of Panels or TRPs. That is, the terminal may receive the first information, which indicates the uplink power control default parameter for the terminal.

In the embodiments of the present disclosure, the first information may be used to configure the uplink power control default parameter associated with the TCI states corresponding to the plurality of Panels or TRPs in the power control parameter set of the terminal. In one example, the first information may be an extended BWP _UplinkDedicated. The extended BWP_UplinkDedicated may be used to indicate multiple uplink power control default parameters as the terminal's uplink power control default parameters.

The plurality of uplink power control default parameters may be different multiple uplink power control default parameters. In one example, the plurality of uplink power control default parameters may respectively correspond to different closed loop indexes. That is, the plurality of uplink power control default parameters may respectively correspond one-to-one to a plurality of different closed loop power control indexes, meaning each uplink power control default parameter corresponds to one closed loop power control index, and the closed loop power control indexes corresponding to the multiple uplink power control default parameters are different. Furthermore, different uplink power control default parameters among the plurality of uplink power control default parameters may be respectively associated with different TCI states among the TCI states corresponding to the plurality of Panels or TRPs. That is, different uplink power control default parameters among the plurality of uplink power control default parameters may be respectively associated one-to-one with different TCI states among the TCI states corresponding to the plurality of Panels or TRPs. That is, each different uplink power control default parameter among the plurality is associated with one different TCI state. In one example, two uplink power control default parameters may be indicated based on the extended BWP _UplinkDedicated, namely uplink power control default parameter setting1 and uplink power control default parameter setting2. Wherein setting1 and setting2 respectively correspond to different closed loop indexes, for example, setting1 corresponds to closed loop index1, and setting2 corresponds to closed loop index2, or vice versa. Furthermore, setting 1 and setting2 are associated with different TCI states among the TCI states corresponding to the two Panels or TRPs, for example, setting1 is associated with TCI state1, and setting2 is associated with TCI state2, or vice versa.

In the embodiments of the present disclosure, among the TCI states corresponding to the plurality of Panels or TRPs, there may be a first TCI state associated with an uplink power control default parameter and a second TCI state not associated with any uplink power control default parameter; or the TCI states corresponding to the plurality of Panels or TRPs may include a third TCI state configured for communication based on a single transmission and reception point; at this time, a first uplink power control default parameter may be associated with the second TCI state or the third TCI state.

That is to say, in the case of M-TRP transmission, it may occur that one or more Joint/UL TCI states corresponding to each TRP in M-TRP transmission are not associated with an uplink power control default parameter, i.e., have no uplink power control default parameter, while one or more other Joint/UL TCI states are associated with an uplink power control default parameter, i.e., have an uplink power control default parameter; on the other hand, there may also be S-TRP transmission under M-TRP configuration, and the TCI state corresponding to this S-TRP is not associated with an uplink power control default parameter, i.e., has no uplink power control default parameter. At this time, it is necessary to configure an uplink power control default parameter for these TCI states not associated with an uplink power control default parameter.

In the embodiments of the present disclosure, the first uplink power control default parameter may be associated with the one or more Joint/UL TCI states mentioned above that are not associated with an uplink power control default parameter. Alternatively, the first uplink power control default parameter may be associated with the TCI state corresponding to the S-TRP mentioned above that is not associated with an uplink power control default parameter.

The first uplink power control default parameter may include: a first specified uplink power control default parameter among the plurality of uplink power control default parameters; or a second specified uplink power control default parameter among the plurality of uplink power control default parameters, where the second specified uplink power control default parameter corresponds to a closed loop index different from a closed loop index corresponding to a default uplink power control default parameter associated with a TCI state.

In one example, assume in a transmission scenario based on 2 TRPs, there is a situation where the Joint/UL TCI state corresponding to one TRP is not associated with an uplink power control default parameter, while the Joint/UL TCI state corresponding to the other TRP is associated with an uplink power control default parameter. At the same time, the extended BWP _UplinkDedicated indicates two uplink power control default parameters. On one hand, one of the two uplink power control default parameters indicated by BWP_UplinkDedicated, for example, the first uplink power control default parameter, may be used as the first uplink power control default parameter, and this first uplink power control default parameter is associated with the TCI state mentioned above that is not associated with an uplink power control default parameter. It can be understood by those skilled in the art that determining the first uplink power control default parameter among the two as the first uplink power control default parameter is only an example. In actual implementation, any one of the two uplink power control default parameters may be determined as the first uplink power control default parameter according to need.

On the other hand, among the two uplink power control default parameters indicated by BWP _UplinkDedicated, the uplink power control default parameter whose closed loop index is different from the closed loop index corresponding to the uplink power control default parameter associated with the TCI state that is associated, may be used as the first uplink power control default parameter. For example, if the closed loop index of the uplink power control default parameter associated with the associated TCI state is 0, then the uplink power control default parameter with closed loop index 1 may be determined as the first uplink power control default parameter, or vice versa.

In another example, assume in an M-TRP transmission scenario, a certain TCI state is configured for communication based on a single transmission and reception point. At this time, one of the two uplink power control default parameters indicated by BWP _UplinkDedicated, for example, the first uplink power control default parameter, may be used as the first uplink power control default parameter, and this first uplink power control default parameter is associated with the TCI state mentioned above configured for communication based on a single transmission and reception point. Similarly, it can be understood by those skilled in the art that the determination of the first uplink power control default parameter is not limited to the first one. In actual implementation, any one of the two uplink power control default parameters may be determined as the first uplink power control default parameter according to need.

In the embodiments of the present disclosure, the TCI states corresponding to the plurality of Panels or TRPs may all be not associated with any uplink power control default parameter; at this time, uplink power control default parameters at different sequence positions among the plurality of uplink power control default parameters may be respectively associated with different TCI states among the TCI states corresponding to the plurality of Panels or TRPs. Alternatively, uplink power control default parameters corresponding to different closed loop indexes among the plurality of uplink power control default parameters may be respectively associated with different TCI states among the TCI states corresponding to the plurality of Panels or TRPs.

That is to say, in the case of M-TRP transmission, it may occur that all Joint/UL TCI states corresponding to each TRP in M-TRP transmission are not associated with an uplink power control default parameter, i.e., have no uplink power control default parameter. At this time, it is necessary to configure an uplink power control default parameter for these TCI states not associated with an uplink power control default parameter.

In the embodiments of the present disclosure, uplink power control default parameters at different sequence positions among the plurality of uplink power control default parameters may be respectively associated with different TCI states among the TCI states corresponding to the plurality of Panels or TRPs. In one example, assume in a transmission scenario based on 2 TRPs, the Joint/UL TCI states corresponding to the 2 TRPs are both not associated with an uplink power control default parameter. At the same time, the extended BWP_UplinkDedicated indicates two uplink power control default parameters. At this time, the first uplink power control default parameter among the two indicated by BWP_UplinkDedicated may be associated with the Joint/UL TCI state corresponding to the first TRP, and the second uplink power control default parameter may be associated with the Joint/UL TCI state corresponding to the second TRP, or vice versa.

In the embodiments of the present disclosure, it is also possible that among the two uplink power control default parameters, those corresponding to different closed loop indexes are respectively associated with different TCI states among the TCI states corresponding to the plurality of Panels or TRPs. In one example, assume in a transmission scenario based on 2 TRPs, the Joint/UL TCI states corresponding to the 2 TRPs are both not associated with an uplink power control default parameter. At the same time, the extended BWP_UplinkDedicated indicates two uplink power control default parameters. At this time, the uplink power control default parameter with closed loop index 0 among the two indicated by BWP_UplinkDedicated may be associated with the Joint/UL TCI state corresponding to the first TRP, and the uplink power control default parameter with closed loop index 1 may be associated with the Joint/UL TCI state corresponding to the second TRP, or vice versa.

According to the embodiments of the present disclosure, by extending BWP_UplinkDedicated so that the extended BWP_UplinkDedicated can be used to configure multiple uplink power control default parameters, and based on these multiple uplink power control default parameters, configure the uplink power control default parameter associated with the TCI states corresponding to the plurality of Panels or TRPs, a configuration method for the terminal uplink power control default parameter in the case of M-TRP transmission is provided, better supporting the implementation of the M-TRP transmission scenario.

In the embodiments of the present disclosure, the first information may be used to configure a single uplink power control default parameter. In one example, the first information may be BWP _UplinkDedicated. The BWP_UplinkDedicated may be used to indicate a single uplink power control default parameter as the terminal's uplink power control default parameter.

In the embodiments of the present disclosure, the TCI states corresponding to the plurality of Panels or TRPs may all be associated with the single uplink power control default parameter. At this time, the uplink power control default parameter corresponding to the TCI states corresponding to the plurality of Panels or TRPs is this single uplink power control default parameter.

In the embodiments of the present disclosure, among the TCI states corresponding to the plurality of Panels or TRPs, there may be a first TCI state associated with an uplink power control default parameter and a second TCI state not associated with any uplink power control default parameter; or the TCI states corresponding to the plurality of Panels or TRPs may include a third TCI state configured for communication based on a single transmission and reception point; at this time, the single uplink power control default parameter may be associated with the second TCI state or the third TCI state.

That is to say, in the case of M-TRP transmission, it may occur that one or more Joint/UL TCI states corresponding to each TRP in M-TRP transmission are not associated with an uplink power control default parameter, i.e., have no uplink power control default parameter, while one or more other Joint/UL TCI states are associated with an uplink power control default parameter, i.e., have an uplink power control default parameter; on the other hand, there may also be S-TRP transmission under M-TRP configuration, and the TCI state corresponding to this S-TRP is not associated with an uplink power control default parameter, i.e., has no uplink power control default parameter. At this time, it is necessary to configure an uplink power control default parameter for these TCI states not associated with an uplink power control default parameter.

In the embodiments of the present disclosure, the single uplink power control default parameter configured based on the first information may be associated with the second TCI state or the third TCI state. At this time, the uplink power control default parameter corresponding to the one or more Joint/UL TCI states mentioned above that are not associated and the uplink power control default parameter corresponding to the TCI state of the S-TRP associated with an uplink power control default parameter mentioned above are all this single uplink power control default parameter.

In the embodiments of the present disclosure, the TCI states corresponding to the plurality of Panels or TRPs may all be not associated with any uplink power control default parameter; at this time, the TCI states corresponding to the plurality of Panels or TRPs may be associated with the single uplink power control default parameter.

That is to say, in the case of M-TRP transmission, it may occur that all Joint/UL TCI states corresponding to each TRP in M-TRP transmission are not associated with an uplink power control default parameter, i.e., have no uplink power control default parameter. At this time, it is necessary to configure an uplink power control default parameter for these TCI states not associated with an uplink power control default parameter.

In the embodiments of the present disclosure, each TCI state associated with an uplink power control default parameter may be associated with the single uplink power control default parameter configured based on the first information. At this time, the uplink power control default parameter corresponding to the TCI states corresponding to the plurality of Panels or TRPs mentioned above is this single uplink power control default parameter. At this time, the terminal's PUSCH/PUCCH transmission may be implemented based on SFN/TDM/FDM schemes.

According to the embodiments of the present disclosure, by using BWP_UplinkDedicated to configure the uplink power control default parameter associated with one or more TCI states among the TCI states corresponding to the plurality of Panels or TRPs, another configuration method for the terminal uplink power control default parameter in the case of M-TRP transmission is provided, better supporting the implementation of the M-TRP transmission scenario.

In the embodiments of the present disclosure, when the terminal sends the PUSCH based on the plurality of Panels or TRPs, it may not use the unified TCI state framework to determine the resources corresponding to sending the PUSCH. At this time, to determine the resources corresponding to sending the PUSCH, it is necessary to configure terminal initial transmit power configuration parameters for the terminal, where the terminal initial transmit power configuration parameters may be P0AlphaSet.

FIG. 10 is a flowchart of a method for determining an uplink power control default parameter associated with TCI states corresponding to a plurality of Panels or TRPs according to an embodiment. As shown in FIG. 10, the method includes the following steps.

Step S71: in response to a network device configuring terminal initial transmit power configuration parameters for the terminal, determine the uplink power control default parameter, where the uplink power control default parameter is associated with the TCI states corresponding to the plurality of Panels or TRPs.

In the embodiments of the present disclosure, when it is determined that P0AlphaSet is configured for the terminal, the uplink power control default parameter may be determined. This default uplink power control default parameter is associated with the TCI states corresponding to the plurality of Panels or TRPs.

In the embodiments of the present disclosure, the uplink power control default parameter may be determined by at least one of the following methods: determining the uplink power control default parameter corresponding to an SRI corresponding to the PUSCH as the uplink power control default parameter; or determining, from the terminal initial transmit power configuration parameters, an uplink power control default parameter corresponding to a specified index as the uplink power control default parameter.

That is to say, for the case where P0AlphaSet is configured for the terminal and the PUSCH indicates an SRI, the corresponding uplink power control default parameter may be determined through the corresponding SRI as the uplink power control default parameter. In one example, if the PUSCH indicates SRI1 and SRI2, the uplink power control default parameter corresponding to SRI1 may be determined as the uplink power control default parameter, or the uplink power control default parameter corresponding to SRI2 may be determined as the uplink power control default parameter.

On the other hand, since P0AlphaSet can correspond to multiple uplink power control default parameters, the uplink power control default parameter corresponding to a specified index in P0AlphaSet may be directly used as the uplink power control default parameter. In one example, assume in a transmission scenario based on 2 TRPs, uplink power control default parameters corresponding to the 2 TRPs respectively need to be determined. At this time, the first and second uplink power control default parameters with the lowest indexes among the uplink power control default parameters corresponding to P0AlphaSet may be used as the uplink power control default parameters.

According to the embodiments of the present disclosure, by using the uplink power control default parameter determined via the SRI corresponding to the PUSCH when P0AlphaSet is configured for the terminal, yet another configuration method for the terminal uplink power control default parameter in the case of M-TRP transmission is provided, better supporting the implementation of the M-TRP transmission scenario.

FIG. 11 is a flowchart of a method for configuring an uplink power control default parameter associated with TCI states corresponding to a plurality of Panels or TRPs according to an embodiment. As shown in FIG. 11, the method includes the following steps.

Step S81: in response to a network device configuring terminal initial transmit power configuration parameters for the terminal, determining, among the plurality of uplink power control default parameters corresponding to the terminal initial transmit power configuration parameters, uplink power control default parameters corresponding to different closed loop indexes and respectively corresponding to the TCI states corresponding to the plurality of Panels or TRPs.

In the embodiments of the present disclosure, when it is determined that P0AlphaSet is configured for the terminal, since P0AlphaSet can correspond to multiple uplink power control default parameters, the uplink power control default parameter may be determined based on P0AlphaSet, and then the uplink power control default parameter may be associated with the TCI states corresponding to the plurality of Panels or TRPs, thereby completing the configuration of the uplink power control default parameter for the terminal.

In one example, assume in a transmission scenario based on 2 TRPs, uplink power control default parameters corresponding to the 2 TRPs respectively need to be determined, i.e., it is necessary to associate the first TCI state corresponding to the first TRP and the second TCI state corresponding to the second TRP with corresponding uplink power control default parameters. At this time, the uplink power control default parameter corresponding to closed loop index 0 among those corresponding to P0AlphaSet may be associated with the first TCI state, and the uplink power control default parameter corresponding to closed loop index 1 may be associated with the second TCI state, or vice versa.

According to the embodiments of the present disclosure, by using the uplink power control default parameter determined via the multiple uplink power control default parameters corresponding to P0AlphaSet when P0AlphaSet is configured for the terminal, still another configuration method for the terminal uplink power control default parameter in the case of M-TRP transmission is provided, better supporting the implementation of the M-TRP transmission scenario.

It can be understood that the technical implementations involved in the process of the network device performing power control default parameter configuration in the embodiments of the present disclosure can be applied to the process of the terminal performing power control default parameter configuration in the embodiments of the present disclosure. Therefore, for some technical implementation descriptions that are not detailed enough in the process of the network device performing power control default parameter configuration, reference may be made to the relevant descriptions in the implementation process of the terminal performing power control default parameter configuration, which will not be repeated here.

It can be understood that the method for configuring a power control parameter provided by the embodiments of the present disclosure is applicable to the process of interaction between the terminal and the network device to implement power control default parameter configuration. Regarding the process of interaction between the terminal and the network device to implement power control default parameter configuration, the embodiments of the present disclosure will not be described in detail.

It should be noted that those skilled in the art can understand that the various implementations/embodiments involved in the above embodiments of the present disclosure can be used in conjunction with the foregoing embodiments or can be used independently. Whether used alone or in conjunction with the foregoing embodiments, the implementation principles are similar. In the present disclosure, some embodiments are described in an implementation manner of being used together. Of course, it can be understood by those skilled in the art that such examples are not intended to limit the embodiments of the present disclosure.

Based on the same concept, the embodiments of the present disclosure also provide an apparatus for configuring a power control parameter.

It can be understood that to implement the above functions, the power control parameter configuration apparatus provided by the embodiments of the present disclosure includes hardware structures and/or software modules corresponding to the execution of each function. In combination with the units and algorithm steps of the examples disclosed in the embodiments of the present disclosure, the embodiments of the present disclosure can be implemented in the form of hardware or a combination of hardware and computer software. Whether a function is performed by hardware or computer software driving hardware depends on the specific application and design constraints of the technical solution. Those skilled in the art can use different methods for each specific application to implement the described functions, but such implementation should not be considered beyond the scope of the technical solution of the embodiments of the present disclosure.

FIG. 12 is a block diagram of an apparatus for configuring a power control parameter according to an embodiment. Referring to FIG. 12, the apparatus 100 includes a determination unit 110.

The determination unit 110 is configured to, in response to determining that a terminal sends a PUSCH based on a plurality of Panels or TRPs, configure an uplink power control default parameter associated with TCI states corresponding to the plurality of Panels or TRPs.

In the embodiments of the present disclosure, configuring the uplink power control default parameter associated with the TCI states corresponding to the plurality of Panels or TRPs includes: sending first information, where the first information is used to configure, via higher layer signaling, the uplink power control default parameter associated with the TCI states corresponding to the plurality of Panels or TRPs in a power control parameter set of the terminal; where the power control parameter set of the terminal includes at least one uplink power control default parameter.

In the embodiments of the present disclosure, the first information is used to configure a plurality of uplink power control default parameters in the power control parameter set of the terminal.

In the embodiments of the present disclosure, the uplink power control default parameters are in a one-to-one correspondence with different closed loop indexes.

In the embodiments of the present disclosure, different uplink power control default parameters among the uplink power control default parameters are in a one-to-one association with different TCI states among the TCI states corresponding to the plurality of Panels or TRPs.

In the embodiments of the present disclosure, the TCI states corresponding to the plurality of Panels or TRPs include a first TCI state associated with an uplink power control default parameter and a second TCI state not associated with any uplink power control default parameter; or the TCI states corresponding to the plurality of Panels or TRPs include a third TCI state configured for communication based on a single transmission and reception point; the method further includes: configuring a first uplink power control default parameter to be associated with the second TCI state or the third TCI state.

In the embodiments of the present disclosure, the first uplink power control default parameter includes: a first specified uplink power control default parameter among the plurality of uplink power control default parameters; or a second specified uplink power control default parameter among the plurality of uplink power control default parameters, where a closed loop index corresponding to the second specified uplink power control default parameter is different from a closed loop index corresponding to a default uplink power control default parameter associated with a TCI state.

In the embodiments of the present disclosure, the TCI states corresponding to the plurality of Panels or TRPs are not associated with any of the plurality of uplink power control default parameters, and the method further includes: configuring uplink power control default parameters at different sequence positions among the plurality of uplink power control default parameters to be respectively associated with different TCI states among the TCI states corresponding to the plurality of Panels or TRPs.

In the embodiments of the present disclosure, the TCI states corresponding to the plurality of Panels or TRPs are not associated with any of the plurality of uplink power control default parameters, and the method further includes: configuring uplink power control default parameters corresponding to different closed loop indexes among the plurality of uplink power control default parameters to be respectively associated with different TCI states among the TCI states corresponding to the plurality of Panels or TRPs.

In the embodiments of the present disclosure, the first information is used to configure a single uplink power control default parameter in the power control parameter set of the terminal.

In the embodiments of the present disclosure, the TCI states corresponding to the plurality of Panels or TRPs are associated with the single uplink power control default parameter.

In the embodiments of the present disclosure, the TCI states corresponding to the plurality of Panels or TRPs include a first TCI state associated with the uplink power control default parameter and a second TCI state not associated with the uplink power control default parameter; or the TCI states corresponding to the plurality of Panels or TRPs include a third TCI state configured for communication based on a single transmission and reception point; the method further includes: configuring the single uplink power control default parameter to be associated with the second TCI state or the third TCI state.

In the embodiments of the present disclosure, the TCI states corresponding to the plurality of Panels or TRPs are not associated with any of the plurality of uplink power control default parameters, and the method further includes: configuring the TCI states corresponding to the plurality of Panels or TRPs to be associated with the single uplink power control default parameter.

In the embodiments of the present disclosure, configuring the uplink power control default parameter associated with the TCI states corresponding to the plurality of Panels or TRPs includes: in response to terminal initial transmit power configuration parameters being configured for the terminal, determining the uplink power control default parameter; and associating the uplink power control default parameter with the TCI states corresponding to the plurality of Panels or TRPs.

In the embodiments of the present disclosure, determining the uplink power control default parameter includes at least one of: determining an uplink power control default parameter corresponding to a sounding reference signal resource indicator (SRI) corresponding to the PUSCH as the uplink power control default parameter; or determining, from the terminal initial transmit power configuration parameters, an uplink power control default parameter corresponding to a specified index as the uplink power control default parameter.

In the embodiments of the present disclosure, configuring the uplink power control default parameter associated with the TCI states corresponding to the plurality of Panels or TRPs includes: in response to terminal initial transmit power configuration parameters being configured for the terminal, configuring uplink power control default parameters corresponding to different closed loop indexes among the plurality of uplink power control default parameters corresponding to the terminal initial transmit power configuration parameters to respectively correspond to the TCI states corresponding to the plurality of Panels or TRPs.

According to the embodiments of the present disclosure, by configuring the uplink power control default parameter associated with TCI states corresponding to Panels or TRPs used by the terminal for sending the PUSCH, a configuration method for the terminal uplink power control default parameter in the case of M-TRP transmission is provided, better supporting the implementation of the M-TRP transmission scenario.

FIG. 13 is a block diagram of an apparatus for configuring a power control parameter according to an embodiment. Referring to FIG. 13, the apparatus 200 includes a determination unit 210.

The determination unit 210 is configured to determine an uplink power control default parameter associated with TCI states corresponding to a plurality of Panels or TRPs;
the terminal sends a PUSCH based on the plurality of Panels or TRPs.

In the embodiments of the present disclosure, determining the uplink power control default parameter associated with the TCI states corresponding to the plurality of Panels or TRPs includes: receiving first information, where the first information is used to configure, via higher layer signaling, the uplink power control default parameter associated with the TCI states corresponding to the plurality of Panels or TRPs in a power control parameter set of the terminal.

In the embodiments of the present disclosure, the first information is used to configure a plurality of uplink power control default parameters in the power control parameter set of the terminal.

In the embodiments of the present disclosure, the uplink power control default parameters are in a one-to-one correspondence with different closed loop indexes.

In the embodiments of the present disclosure, different uplink power control default parameters among the uplink power control default parameters are in a one-to-one association with different TCI states among the TCI states corresponding to the plurality of Panels or TRPs.

In the embodiments of the present disclosure, the TCI states corresponding to the plurality of Panels or TRPs include a first TCI state associated with at least one of the plurality of uplink power control default parameters and a second TCI state not associated with any of the plurality of uplink power control default parameters; or the TCI states corresponding to the plurality of Panels or TRPs include a third TCI state configured for communication based on a single transmission and reception point; a first uplink power control default parameter among the plurality of uplink power control default parameters is associated with the second TCI state or the third TCI state.

In the embodiments of the present disclosure, the first uplink power control default parameter includes: a first specified uplink power control default parameter among the plurality of uplink power control default parameters; or a second specified uplink power control default parameter among the plurality of uplink power control default parameters, where a closed loop index corresponding to the second specified uplink power control default parameter is different from a closed loop index corresponding to a default uplink power control default parameter associated with a TCI state.

In the embodiments of the present disclosure, the TCI states corresponding to the plurality of Panels or TRPs are not associated with any of the plurality of uplink power control default parameters, and uplink power control default parameters at different sequence positions among the plurality of uplink power control default parameters are respectively associated with different TCI states among the TCI states corresponding to the plurality of Panels or TRPs.

In the embodiments of the present disclosure, the TCI states corresponding to the plurality of Panels or TRPs are not associated with any of the plurality of uplink power control default parameters, and uplink power control default parameters corresponding to different closed loop indexes among the plurality of uplink power control default parameters are respectively associated with different TCI states among the TCI states corresponding to the plurality of Panels or TRPs.

In the embodiments of the present disclosure, the first information is used to configure a single uplink power control default parameter in the power control parameter set of the terminal.

In the embodiments of the present disclosure, the TCI states corresponding to the plurality of Panels or TRPs are associated with the single uplink power control default parameter.

In the embodiments of the present disclosure, the TCI states corresponding to the plurality of Panels or TRPs include a first TCI state associated with the uplink power control default parameter and a second TCI state not associated with the uplink power control default parameter; or the TCI states corresponding to the plurality of Panels or TRPs include a third TCI state configured for communication based on a single transmission and reception point; the single uplink power control default parameter is associated with the second TCI state or the third TCI state.

In the embodiments of the present disclosure, the TCI states corresponding to the plurality of Panels or TRPs are not associated with any of the plurality of uplink power control default parameters, and the TCI states corresponding to the plurality of Panels or TRPs are associated with the single uplink power control default parameter.

In the embodiments of the present disclosure, determining the uplink power control default parameter associated with the TCI states corresponding to the plurality of Panels or TRPs includes: in response to a network device configuring terminal initial transmit power configuration parameters for the terminal, determining the uplink power control default parameter, where the uplink power control default parameter is associated with the TCI states corresponding to the plurality of Panels or TRPs.

In the embodiments of the present disclosure, the uplink power control default parameter is determined by at least one of: determining an uplink power control default parameter corresponding to an SRI corresponding to the PUSCH as the uplink power control default parameter; or determining, from the terminal initial transmit power configuration parameters, an uplink power control default parameter corresponding to a specified index as the uplink power control default parameter.

In the embodiments of the present disclosure, determining the uplink power control default parameter associated with the TCI states corresponding to the plurality of Panels or TRPs includes: in response to a network device configuring terminal initial transmit power configuration parameters for the terminal, determining, from the plurality of uplink power control default parameters corresponding to the terminal initial transmit power configuration parameter, uplink power control default parameters corresponding to different closed loop indexes and respectively corresponding to the TCI states corresponding to the plurality of Panels or TRPs.

According to the embodiments of the present disclosure, by configuring the uplink power control default parameter associated with TCI states corresponding to Panels or TRPs used by the terminal for sending the PUSCH, a configuration method for the terminal uplink power control default parameter in the case of M-TRP transmission is provided, better supporting the implementation of the M-TRP transmission scenario.

Regarding the apparatus in the above embodiments, the specific manner in which each module performs operations has been described in detail in the embodiments related to the method, and will not be elaborated here.

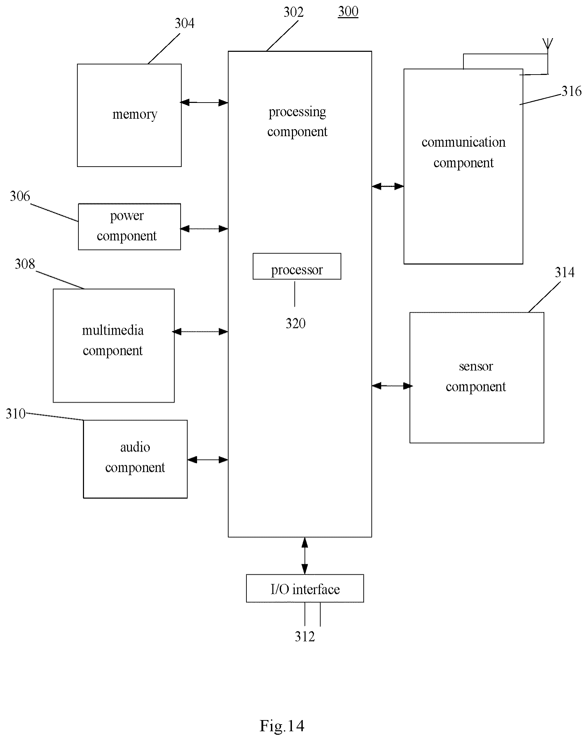

FIG. 14 is a block diagram of an apparatus 300 for power control default parameter configuration according to an embodiment. For example, the apparatus 300 may be a mobile phone, computer, digital broadcast terminal, messaging device, gaming console, tablet device, medical device, fitness equipment, personal digital assistant, or the like.

Referring to FIG. 14, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as operations associated with display, telephone calls, data communications, camera operations, and recording operations. The processing component 302 may include one or more processors 320 to execute instructions to perform all or part of the steps of the above method. Moreover, the processing component 302 may include one or more modules to facilitate interaction between the processing component 302 and other components. For instance, the processing component 302 may include a multimedia module to facilitate interaction between the multimedia component 308 and the processing component 302.

The memory 304 is configured to store various types of data to support operations at the apparatus 300. Examples of such data include instructions for any application or method operating on the apparatus 300, contact data, phonebook data, messages, pictures, videos, etc. The memory 304 may be implemented using any type of volatile or non-volatile memory device or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic or optical disk.

The power component 306 provides power to various components of the apparatus 300. The power component 306 may include a power management system, one or more power sources, and other components associated with generating, managing, and distributing power for the apparatus 300.

The multimedia component 308 includes a screen providing an output interface between the apparatus 300 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of a touch or slide action, but also detect the duration and pressure associated with the touch or slide operation. In some embodiments, the multimedia component 308 includes a front camera and/or a rear camera. When the apparatus 300 is in an operation mode, such as a shooting mode or a video mode, the front camera and/or the rear camera may receive external multimedia data. Each front camera and rear camera may be a fixed optical lens system or have focal length and optical zoom capabilities.

The audio component 310 is configured to output and/or input audio signals. For example, the audio component 310 includes a microphone (MIC). When the apparatus 300 is in an operation mode, such as a call mode, a recording mode, and a voice recognition mode, the microphone is configured to receive external audio signals. The received audio signals may be further stored in the memory 304 or transmitted via the communication component 316. In some embodiments, the audio component 310 also includes a speaker for outputting audio signals.

The I/O interface 312 provides an interface between the processing component 302 and peripheral interface modules. The peripheral interface modules may be a keyboard, a click wheel, buttons, etc. These buttons may include, but are not limited to, a home button, volume buttons, a start button, and a lock button.

The sensor component 314 includes one or more sensors for providing status assessments of various aspects of the apparatus 300. For instance, the sensor component 314 may detect an open/closed status of the apparatus 300, relative positioning of components, e.g., the display and keypad of the apparatus 300. The sensor component 314 may also detect a change in position of the apparatus 300 or a component of the apparatus 300, presence or absence of user contact with the apparatus 300, orientation or acceleration/deceleration of the apparatus 300, and temperature change of the apparatus 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as WiFi, 2G, or 3G, or a combination thereof. In an embodiment, the communication component 316 receives broadcast signals or broadcast-associated information from an external broadcast management system via a broadcast channel. In an embodiment, the communication component 316 also includes a Near Field Communication (NFC) module to facilitate short-range communications. For example, the NFC module may be implemented based on Radio Frequency Identification (RFID) technology, Infrared Data Association (IrDA) technology, Ultra-Wideband (UWB) technology, Bluetooth (BT) technology, and other technologies.

In embodiments, the apparatus 300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components, for performing the above method.

In embodiments, a non-transitory computer-readable storage medium including instructions is also provided, such as the memory 304 including instructions. The instructions may be executed by the processor 320 of the apparatus 300 to perform the above method. For example, the non-transitory computer-readable storage medium may be a ROM, Random Access Memory (RAM), CD-ROM, magnetic tape, floppy disk, optical data storage device, etc.

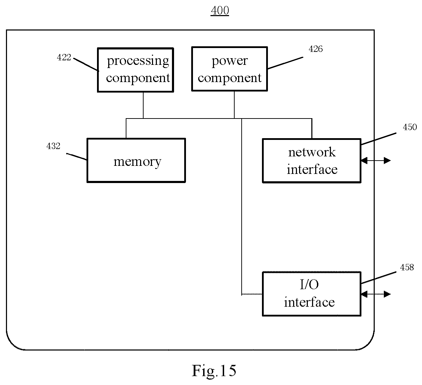

FIG. 15 is a block diagram of an apparatus 400 for power control default parameter configuration according to an embodiment. For example, the apparatus 400 may be provided as a server. Referring to FIG. 15, the apparatus 400 includes a processing component 422, which further includes one or more processors, and memory resources represented by a memory 432, for storing instructions executable by the processing component 422, such as applications. The applications stored in the memory 432 may include one or more modules, each corresponding to a set of instructions. Moreover, the processing component 422 is configured to execute the instructions to perform the above method.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate based on an operating system stored in the memory 432, such as Windows Server^{™}, Mac OS X^{™}, Unix^{™}, Linux^{™}, FreeBSD^{™}, or the like.

Furthermore, it can be understood that "a plurality of" in the present disclosure means two or more, and other quantifiers are similar. "And/or" describes the association relationship of associated objects, indicating that three relationships may exist. For example, A and/or B may indicate: A exists alone, A and B exist simultaneously, or B exists alone. The character "/" generally indicates that the associated objects before and after it are in an "or" relationship. The singular forms "a", "the", and "said" are also intended to include plural forms unless the context clearly indicates otherwise.

Furthermore, it can be understood that the meaning of terms such as "in response to" and "if" involved in the present disclosure depends on the context and the actual usage scenario. As used herein, the word "in response to" may be interpreted as "at the time of", "when", or "if".

Furthermore, it can be understood that terms "first", "second", etc., are used to describe various information, but this information should not be limited by these terms. These terms are only used to distinguish information of the same type from each other and do not imply a specific order or degree of importance. In fact, expressions such as "first" and "second" are completely interchangeable. For example, without departing from the scope of the present disclosure, first information may also be called second information, and similarly, second information may also be called first information.

Furthermore, it can be understood that although operations are described in a specific order in the drawings in the embodiments of the present disclosure, this should not be understood as requiring that these operations be performed in the specific order shown or in serial order, or that all illustrated operations be performed to obtain a desired result. In specific environments, multitasking and parallel processing may be advantageous.

Other embodiments of the present disclosure will be readily apparent to those skilled in the art upon considering the specification and practicing the invention disclosed herein. This application is intended to cover any variations, uses, or adaptations of the present disclosure following the general principles thereof and including common general knowledge or conventional technical means in the art not disclosed herein.

It should be understood that the present disclosure is not limited to the precise structures described above and illustrated in the drawings, and various modifications and changes may be made without departing from the scope thereof. The scope of the present disclosure is limited only by the appended claims.

## Claims

1. A method for configuring a power control parameter, performed by a network device, comprising:
in response to determining that a terminal sends a physical uplink shared channel (PUSCH) based on a plurality of panels or transmission and reception points (TRPs), configuring an uplink power control default parameter associated with transmission configuration indicator (TCI) states corresponding to the plurality of panels or TRPs.

2. The method according to claim 1, wherein the configuring the uplink power control default parameter associated with the TCI states corresponding to the plurality of panels or TRPs comprises:
sending first information, wherein the first information is used to configure, by a higher layer signaling, the uplink power control default parameter associated with the TCI states corresponding to the plurality of panels or TRPs in a power control parameter set of the terminal.

3. The method according to claim 2, wherein the uplink power control default parameter comprises a plurality of uplink power control default parameters, and the first information is used to configure the plurality of uplink power control default parameters in the power control parameter set of the terminal.

4. The method according to claim 3, wherein the plurality of uplink power control default parameters are in a one-to-one correspondence with different closed loop indexes.

5. The method according to claim 4, wherein different uplink power control default parameters among the plurality of uplink power control default parameters are in a one-to-one association with different TCI states among the TCI states corresponding to the plurality of panels or TRPs.

6. The method according to claim 4, wherein
the TCI states corresponding to the plurality of panels or TRPs comprise a first TCI state associated with at least one of the plurality of uplink power control default parameters and a second TCI state not associated with any of the plurality of uplink power control default parameters; or
the TCI states corresponding to the plurality of panels or TRPs comprise a third TCI state configured for communication based on a single transmission and reception point;
the method further comprises:
configuring a first uplink power control default parameter to be associated with the second TCI state or the third TCI state.

7. The method according to claim 6, wherein the first uplink power control default parameter comprises:
a first specified uplink power control default parameter among the plurality of uplink power control default parameters; or
a second specified uplink power control default parameter among the plurality of uplink power control default parameters, wherein a closed loop index corresponding to the second specified uplink power control default parameter is different from a closed loop index corresponding to a default uplink power control default parameter associated with a TCI state.

8. The method according to claim 4, wherein the TCI states corresponding to the plurality of panels or TRPs are not associated with any of the plurality of uplink power control default parameters, and the method further comprises:
configuring uplink power control default parameters at different sequence positions among the plurality of uplink power control default parameters to be respectively associated with different TCI states among the TCI states corresponding to the plurality of panels or TRPs.

9. The method according to claim 4, wherein the TCI states corresponding to the plurality of panels or TRPs are not associated with any of the plurality of uplink power control default parameters, and the method further comprises:
configuring uplink power control default parameters corresponding to different closed loop indexes among the plurality of uplink power control default parameters to be respectively associated with different TCI states among the TCI states corresponding to the plurality of panels or TRPs.

10. The method according to claim 2, wherein the first information is used to configure a single uplink power control default parameter in the power control parameter set of the terminal.

11. The method according to claim 10, wherein the TCI states corresponding to the plurality of panels or TRPs are associated with the single uplink power control default parameter.

12. The method according to claim 10, wherein
the TCI states corresponding to the plurality of panels or TRPs comprise a first TCI state associated with the uplink power control default parameter and a second TCI state not associated with the uplink power control default parameter; or
the TCI states corresponding to the plurality of panels or TRPs comprise a third TCI state configured for communication based on a single transmission and reception point;
the method further comprises:
configuring the single uplink power control default parameter to be associated with the second TCI state or the third TCI state.

13. The method according to claim 10, wherein the TCI states corresponding to the plurality of panels or TRPs are not associated with any of the plurality of uplink power control default parameters, and the method further comprises:
configuring the TCI states corresponding to the plurality of panels or TRPs to be associated with the single uplink power control default parameter.

14. The method according to claim 1, wherein the configuring the uplink power control default parameter associated with the TCI states corresponding to the plurality of panels or TRPs comprises:
in response to terminal initial transmit power configuration parameters being configured for the terminal, determining the uplink power control default parameter; and
associating the uplink power control default parameter with the TCI states corresponding to the plurality of panels or TRPs.

15. The method according to claim 14, wherein determining the uplink power control default parameter comprises at least one of:
determining an uplink power control default parameter corresponding to a sounding reference signal resource indicator (SRI) corresponding to the PUSCH as the uplink power control default parameter; or
determining, from the terminal initial transmit power configuration parameters, an uplink power control default parameter corresponding to a specified index as the uplink power control default parameter.

16. The method according to claim 1, wherein the uplink power control default parameter comprises a plurality of uplink power control default parameters, and the configuring the uplink power control default parameter associated with the TCI states corresponding to the plurality of panels or TRPs comprises:
in response to terminal initial transmit power configuration parameters being configured for the terminal, configuring uplink power control default parameters corresponding to different closed loop indexes among the plurality of uplink power control default parameters corresponding to the terminal initial transmit power configuration parameters to respectively correspond to the TCI states corresponding to the plurality of panels or TRPs.

17. A method for configuring a power control parameter, performed by a terminal, comprising:
determining an uplink power control default parameter associated with TCI states corresponding to a plurality of panels or TRPs;
wherein the terminal sends a PUSCH based on the plurality of panels or TRPs.

18. The method according to claim 17, wherein the determining the uplink power control default parameter associated with the TCI states corresponding to the plurality of panels or TRPs comprises:
receiving first information, wherein the first information is used to configure, by a higher layer signaling, the uplink power control default parameter associated with the TCI states corresponding to the plurality of panels or TRPs in a power control parameter set of the terminal.

19. The method according to claim 18, wherein the uplink power control default parameter comprises a plurality of uplink power control default parameters, and the first information is used to configure the plurality of uplink power control default parameters in the power control parameter set of the terminal.

20. The method according to claim 19, wherein the plurality of uplink power control default parameters are in a one-to-one correspondence with different closed loop indexes.

21. The method according to claim 20, wherein different uplink power control default parameters among the plurality of uplink power control default parameters are in a one-to-one association with different TCI states among the TCI states corresponding to the plurality of panels or TRPs.

22. The method according to claim 20, wherein
the TCI states corresponding to the plurality of panels or TRPs comprise a first TCI state associated with at least one of the plurality of uplink power control default parameters and a second TCI state not associated with any of the plurality of uplink power control default parameters; or
the TCI states corresponding to the plurality of panels or TRPs comprise a third TCI state configured for communication based on a single transmission and reception point;
a first uplink power control default parameter among the plurality of uplink power control default parameters is associated with the second TCI state or the third TCI state.

23. The method according to claim 22, wherein the first uplink power control default parameter comprises:
a first specified uplink power control default parameter among the plurality of uplink power control default parameters; or
a second specified uplink power control default parameter among the plurality of uplink power control default parameters, wherein a closed loop index corresponding to the second specified uplink power control default parameter is different from a closed loop index corresponding to a default uplink power control default parameter associated with a TCI state.

24. The method according to claim 20, wherein the TCI states corresponding to the plurality of panels or TRPs are not associated with any of the plurality of uplink power control default parameters, and uplink power control default parameters at different sequence positions among the plurality of uplink power control default parameters are respectively associated with different TCI states among the TCI states corresponding to the plurality of panels or TRPs.

25. The method according to claim 20, wherein the TCI states corresponding to the plurality of panels or TRPs are not associated with any of the plurality of uplink power control default parameters, and uplink power control default parameters corresponding to different closed loop indexes among the plurality of uplink power control default parameters are respectively associated with different TCI states among the TCI states corresponding to the plurality of panels or TRPs.

26. The method according to claim 18, wherein the first information is used to configure a single uplink power control default parameter in the power control parameter set of the terminal.

27. The method according to claim 26, wherein the TCI states corresponding to the plurality of panels or TRPs are associated with the single uplink power control default parameter.

28. The method according to claim 26, wherein
the TCI states corresponding to the plurality of panels or TRPs comprise a first TCI state associated with the uplink power control default parameter and a second TCI state not associated with the uplink power control default parameter; or
the TCI states corresponding to the plurality of panels or TRPs comprise a third TCI state configured for communication based on a single transmission and reception point;
the single uplink power control default parameter is associated with the second TCI state or the third TCI state.

29. The method according to claim 26, wherein the TCI states corresponding to the plurality of panels or TRPs are not associated with any of the plurality of uplink power control default parameter, and the TCI states corresponding to the plurality of panels or TRPs are associated with the single uplink power control default parameter.

30. The method according to claim 17, wherein determining the uplink power control default parameter associated with the TCI states corresponding to the plurality of panels or TRPs comprises:
in response to a network device configuring terminal initial transmit power configuration parameters for the terminal, determining the uplink power control default parameter, wherein the uplink power control default parameter is associated with the TCI states corresponding to the plurality of panels or TRPs.

31. The method according to claim 30, wherein the uplink power control default parameter is determined by at least one of:
determining an uplink power control default parameter corresponding to an SRI corresponding to the PUSCH as the uplink power control default parameter; or
determining, from the terminal initial transmit power configuration parameters, an uplink power control default parameter corresponding to a specified index as the uplink power control default parameter.

32. The method according to claim 17, wherein the uplink power control default parameter comprises a plurality of uplink power control default parameters, and determining the uplink power control default parameter associated with the TCI states corresponding to the plurality of panels or TRPs comprises:
in response to a network device configuring terminal initial transmit power configuration parameters for the terminal, determining, from the plurality of uplink power control default parameters corresponding to the terminal initial transmit power configuration parameter, uplink power control default parameters corresponding to different closed loop indexes and respectively corresponding to the TCI states corresponding to the plurality of panels or TRPs.

33. A apparatus for configuring a power control parameter, comprising:
a determination unit, configured to, in response to determining that a terminal sends a PUSCH based on a plurality of panels or TRPs, configure an uplink power control default parameter associated with TCI states corresponding to the plurality of panels or TRPs.

34. A apparatus for configuring a power control parameter, comprising:
a determination unit, configured to determine an uplink power control default parameter associated with TCI states corresponding to a plurality of panels or TRPs;
wherein the terminal sends a PUSCH based on the plurality of panels or TRPs.

35. A apparatus for a configuring power control parameter, comprising:
a processor; and
a memory for storing processor-executable instructions;
wherein the processor is configured to perform the method according to any one of claims 1 to 16.

36. A apparatus for a configuring power control parameter, comprising:
a processor; and
a memory for storing processor-executable instructions;
wherein the processor is configured to perform the method according to any one of claims 17 to 32.

37. A storage medium, wherein the storage medium stores instructions that, when executed by a processor of a terminal, cause the terminal to perform the method according to any one of claims 1 to 16.

38. A storage medium, wherein the storage medium stores instructions that, when executed by a processor of a network device, cause the network device to perform the method according to any one of claims 17 to 32.
